# EUROPEAN PATENT APPLICATION

(11) **EP 4 477 389 A1**
(43) Date of publication of application: **18.12.2024**
(21) Application number: 23749962.9
(22) Date of filing: 02.02.2023
(51) Int. Cl.: B29C 65/00, H01M 50/105, B29C 65/14, B29C 65/48, B29L 31/00, B29K 23/00

(54) **FOLDING DEVICE AND FOLDING METHOD FOR POUCH-TYPE SECONDARY BATTERY SEALING PORTION**

(30) Priority: 07.02.2022 KR 20220015836
(71) Applicant: LG Energy Solution, Ltd., Seoul 07335 (KR)
(72) Inventor: CHO, Hee Yoon, Daejeon 34122 (KR); CHOI, Yong Su, Daejeon 34122 (KR)
(74) Representative: Goddar, Heinz J.
(86) International application number: PCT/KR2023/001539
(87) International publication number: WO 2023/149729

(57) **Abstract**

A folding method according to the present invention is a method for folding a sealing part of a pouch type secondary battery in which the sealing part protrudes in a lateral direction of a pouch having an electrode assembly embedded therein. The method includes: a sealing part heating process of heating the sealing part; and a folding process of pressing and folding the heated sealing part, wherein the heating process includes a non-contact heating process of emitting light onto the sealing part through a heating lamp to heat the sealing part.

A folding apparatus according to the present invention is an apparatus for folding a sealing part of a pouch type secondary battery in which the sealing part protrudes in a lateral direction of a pouch having an electrode assembly embedded therein. The apparatus includes: a heating part that heats the sealing part; and a folding part that presses and folds the heated sealing part, wherein the heating part includes a heating lamp that emits light onto the sealing part to heats the sealing part. The heating lamp is disposed at each of an upper side and a lower side of the sealing part so as to heat a top surface and a bottom surface of the sealing part at the same time.

## Description

### TECHNICAL FIELD

### CROSS-REFERENCE TO RELATED APPLICATION

The present application claims the benefit of the priority of Korean Patent Application No. 10-2022-0015836, filed on February 07, 2022, which is hereby incorporated by reference in its entirety.

### TECHNICAL FIELD

The present invention relates to an apparatus and method for folding a sealing part provided along an edge of a pouch type secondary battery, and more particularly, to an apparatus and method for folding a sealing part of a pouch type secondary battery, which is capable of solving a problem of a structure according to the related art, in which excessive pressure is applied to the sealing part to cause damage to the sealing part.

### BACKGROUND ART

A demand for secondary batteries as energy sources rapidly increases in several fields including personal digital assistants and electric vehicles.

The secondary batteries that are chargeable and dischargeable unlike primary batteries are developed not only for use in digital devices but also for use in transport means such as electric vehicles.

The secondary batteries may be variously classified according to materials of a positive electrode and a negative electrode and outer shapes. Among the secondary batteries, lithium secondary batteries using lithium compounds are widely used in place of typical nickel-cadmium secondary batteries, etc., because of their large capacity and low self-discharge rate.

In addition, the lithium secondary batteries may be manufacture in various forms, and it is common to be representatively manufactured in a cylinder type, a prismatic type, and a pouch type.

Among the types, a pouch type secondary battery includes a pouch, and an electrode assembly that is embedded in the pouch to charge and discharge electric energy.

The electrode assembly is configured so that a negative electrode and a positive electrode are alternately stacked together with a separator, and is manufactured so that an electrode tab, which is constituted by a negative electrode tab protruding from the negative electrode and a positive electrode tab protruding from the positive electrode, is bonded to an electrode lead and an end at one side of the electrode lead protrudes to the outside of the pouch. Here, according to a method for manufacturing the positive electrode and the negative electrode, the positive electrode tab and the negative electrode tab may be disposed at opposite sides to each other or may be disposed to be spaced apart from each other at the same side.

The pouch is manufactured to have a structure that is divisible into two portions so as to cover one side surface and the other side surface of the electrode assembly and accommodate the electrode assembly (e.g., a structure that is divisible into an upper portion and a lower portion) . When the electrode assembly and an electrolyte are mounted in the pouch, the two portions divided are bonded to each other to form a sealing part 1.

For example, the pouch 2 may be manufactured so that a groove having a shape recessed with a predetermined size is defined in each of the upper portion and the lower portion thereof to accommodate the electrode assembly, and an edge of the groove is provided to be flat along a circumference.

Thus, when the electrode assembly is mounted and then the upper portion and the lower portion of the pouch 2 are closed, the respective edges of the upper and lower portions are in contact with each other, and the sealing part 1, at which the edges are thermally fused and sealed to each other in this state, is provided along an edge of the pouch 2.

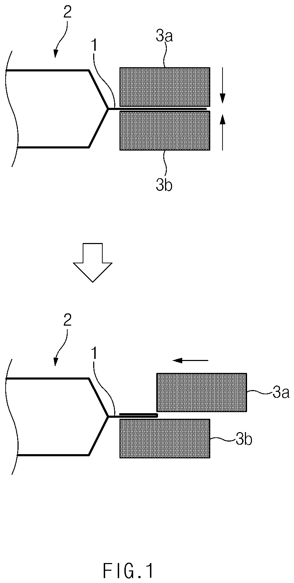

Referring to FIG. 1, which illustrates a process of folding a sealing part of a pouch type secondary battery according to the related art, performed, the sealing part 1 of the pouch 2 is heated through heating blocks 3a and 3b. The heating blocks 3a and 3b are constituted by an upper mold 3a and a lower mold 3b so as to be away from or close to each other, and the upper mold 3a and the lower mold 3b are provided in a state of being heated to a predetermined temperature.

When the sealing part 1 enters between the upper mold 3a and the lower mold 3b, the upper mold 3a and the lower mold 3b press and heat the sealing part 1 up and down so as to thermally fuse the sealing part 1. The upper mold 3a is configured to be slid laterally (a left and right direction in FIG. 1) to fold the sealing part 1 in a state in which the lower mold 3b supports the sealing part 1 from below the sealing part 1. Alternatively, the sealing part 1 may be separated from the heating blocks and then folded through a separate folding device (not shown).

However, there is a likelihood that such a heating method through the pressing by the upper mold 3a and the lower mold 3b causes damage such as dielectric breakdown, to a synthetic resin layer made of a thermoplastic resin, which is included in the pouch 1. Moreover, there is a problem that as the heating blocks 3a and 3b are repeatedly used, a temperature difference occurs and thus, sealing quality is difficult to maintain.

### DISCLOSURE OF THE INVENTION

### TECHNICAL PROBLEM

Thus, a main object of the present invention is to provide an apparatus and method for folding a sealing part of a pouch type secondary battery, which is capable of solving a problem that a synthetic resin layer is damaged by pressure occurring by direct contact when heating the sealing part, and heating the sealing part while maintaining a uniform temperature.

### TECHNICAL SOLUTION

The present invention for achieving the object as described above is to provide an apparatus and method for folding a sealing part of a pouch type secondary battery in which the sealing part protrudes laterally (a left and right direction in the drawings) along an edge of a pouch having an electrode assembly embedded therein.

A folding method according to the present invention is a method for folding a sealing part of a pouch type secondary battery. The method includes: a sealing part heating process of heating the sealing part; and a folding process of pressing and folding the heated sealing part, wherein the heating process includes a non-contact heating process of emitting light onto the sealing part through a heating lamp to heat the sealing part.

The sealing part includes a layer made of a thermoplastic resin, and the thermoplastic resin is polypropylene.

The light emitted from the heating lamp is infrared light.

The heating process includes a contact heating process of allowing heated heating blocks to be in contact with and to heat the sealing part.

In the heating process, the non-contact heating process is performed and then, the contact heating process is performed, or the contact heating process is performed and then, the non-contact heating process is performed.

Here, one of the contact heating process and the non-contact heating process is first performed and then, some of the folding process are performed, and the other of the contact heating process and the non-contact heating process is performed and then, the rest of the folding process are performed.

In the heating process, the non-contact heating process of emitting the light onto the sealing part through the heating lamp to heat the sealing part is performed multiple times, wherein the non-contact heating process is first performed and then, some of the folding process are performed, and the non-contact heating process is performed again in such a state and then, the rest of the folding process are performed.

The method includes, after the folding process is completed, a taping process of attaching a fixing tape so that the folded sealing part is fixed.

A folding apparatus according to the present invention is an apparatus for folding a sealing part of a pouch type secondary battery in which the sealing part protrudes in a lateral direction of a pouch having an electrode assembly embedded therein. The apparatus includes: a heating part that heats the sealing part; and a folding part that presses and folds the heated sealing part, wherein the heating part includes a heating lamp that emits light onto the sealing part to heat the sealing part. Here, the heating lamp is disposed at each of an upper side and a lower side of the sealing part so as to heat a top surface and a bottom surface of the sealing part at the same time.

The heating part includes a heating block including an upper mold and a lower mold, which are slidable to be away from or close to each other, wherein at least one of the upper mold or the lower mold is heated to a predetermined temperature to be in contact with and heat the sealing part when the sealing part enters between the upper mold and the lower mold. Here, the heating lamp and the heating block are configured to be slidable to be exchanged with each other.

The folding part includes: a fixing part that fixes a point at which the sealing part is bent when the folding is performed; and a pressing part that presses the sealing part in a direction in which the folding is performed.

### ADVANTAGEOUS EFFECTS

The present invention having the technical features as above may resolve the problems of the related art that the pressure is applied to the sealing part (by the direct contact of the heating block) to cause the damage because the heating lamp emits the infrared light onto the sealing part to perform the heating.

In addition, when compared to the contact heating method according to the related art, the heating temperature may be uniformly maintained and thus, the sealing quality of the sealing part may be maintained to be consistent.

Moreover, in the present invention, the contact heating of allowing the heated heating blocks to be in contact with and heat the sealing part may be performed and thus, the heating may be performed while applying the appropriate pressure to the sealing part. Here, as the contact heating is additionally performed before and after the non-contact heating is performed, the pressure applied to the sealing part may be reduced compared to the method according to the related art. Thus, the damage to the sealing part may be prevented.

### BRIEF DESCRIPTION OF THE DRAWINGS

FIG. 1 is a view illustrating a process of folding a sealing part of a pouch type secondary battery according to the related art.
FIG. 2 is a view illustrating a process of folding a sealing part of a pouch type secondary battery in a state in which non-contact heating is performed in a heating process according to the present invention.
FIG. 3 is a view illustrating a process in which subsequent processes are performed after the processes illustrated in FIG. 2 are performed.
FIG. 4 is a view illustrating a process of folding the sealing part through the same process as that in FIG. 2, wherein contact heating is performed in a first heating process, and non-contact heating is performed in a second heating process.
FIG. 5 is a view illustrating a process of folding the sealing part through the same process as that in FIG. 2, wherein the non-contact heating is performed in a first heating process, and the contact heating is performed in a second heating process.

### MODE FOR CARRYING OUT THE INVENTION

Hereinafter, the present invention will be described in detail with reference to the accompanying drawings to enable those skilled in the art to which the present invention pertains to easily carry out the present invention. The present invention may, however, be embodied in different forms and should not be construed as limited to the embodiments set forth herein.

The parts unrelated to the description will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

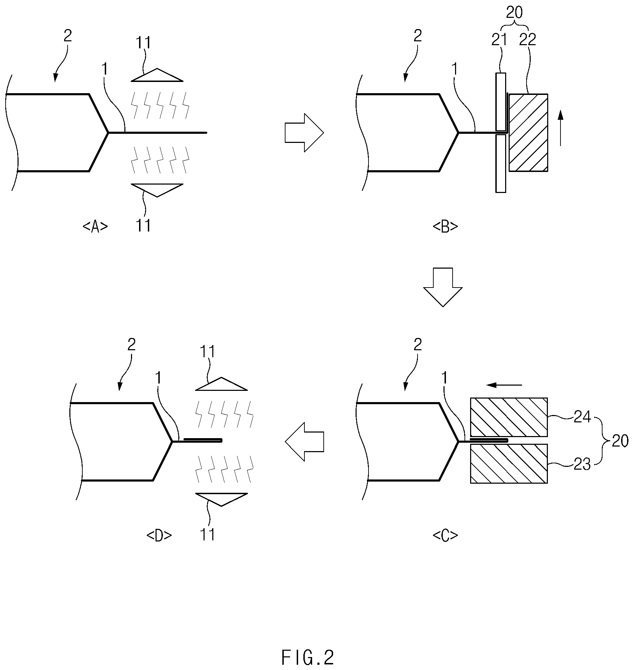

The present invention relates to a method and apparatus for folding a sealing part of a pouch type secondary battery in which a sealing part 1 protrudes laterally (in a left and right direction in FIG. 2) along a circumference of a pouch 2 having an electrode assembly embedded therein. Hereinafter, embodiments according to the present invention will be described in more detail with reference to the accompanying drawings.

### First embodiment

The present invention provides a method for folding a sealing part 1 of a pouch type secondary battery as a first embodiment.

The folding method according to the present invention includes a heating process and a folding process, and the heating process includes a non-contact heating process in which the sealing part 1 is not in direct contact with a heat source.

The heating process is a process of heating the sealing part 1 to a predetermined temperature, and is performed at least two times while the folding method provided in this embodiment is performed. Here, at least one heating process is performed as the non-contact heating process of emitting light onto the sealing part 1 through a heating lamp 11 to heat the sealing part 1. The heating lamp 11 described herein is regarded as a heating lamp capable of providing an output to heat the sealing part 1 to a predetermined temperature and uniformly emitting light onto the entirety of the sealing part 1, so as to heat the sealing part 1 through radiant heat.

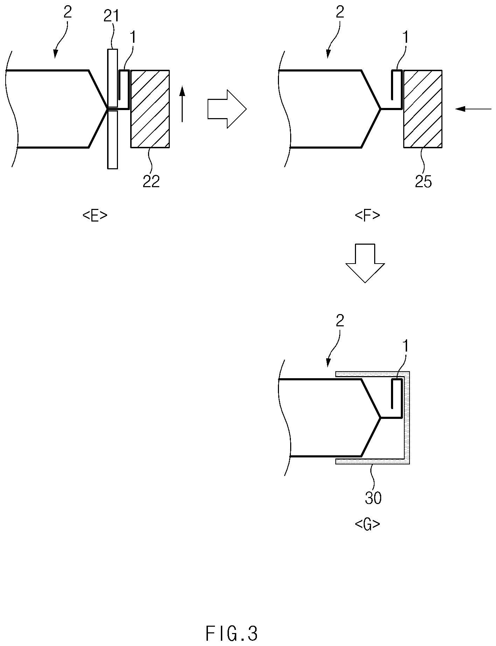

FIG. 2 is a view illustrating a process of folding a sealing part of a pouch type secondary battery in a state in which non-contact heating is performed in a heating process according to the present invention. That is, FIG. 2 is a view illustrating operations in which a first heating process <A>, a first folding process <B>, a second folding process <C>, and a second heating process <D> are performed. FIG. 3 is a view illustrating operations in which subsequent processes (a third folding process <E>, a fourth folding process <F>, and a taping process <G>) are performed after the processes illustrated in FIG. 2 are performed.

As illustrated in the drawings, the folding method according to the present invention is performed by repeating each of the heating process and the folding process multiple times.

The first heating process <A> is performed in a state in which the sealing part 1 is spread to be flat. In a state in which the heating lamp 11 is disposed at each of an upper side and a lower side of the sealing part 1, the heating lamp 11 emits infrared light onto a surface at each of the upper side and the lower side of the sealing part 1 so as to heat the sealing part 1 to a predetermined temperature.

Preferably, the infrared light emitted in this embodiment may be near-infrared light that belongs to the shortest wavelength range. The near-infrared light is infrared light having a wavelength range of 750 nm to 4 um, and has advantages that the heating may be performed for a relatively short time and worker's safety may be secured even during prolonged exposure, when compared to mid-infrared light or far-infrared light. The heating may be performed by emitting ultraviolet light having a shorter wavelength in place of the infrared light, but the worker's safety may not be secured when the ultraviolet light is used. Thus, the present application provides, as a heat source, the near-infrared light having high heating efficiency and capable of securing the safety. Thus, a halogen lamp, an LED lamp, a diode lamp, or the like, which is capable of emitting the near-infrared light, may be used as the heating lamp.

Here, the sealing part 1 includes a layer made of a thermoplastic resin, and the thermoplastic resin is polypropylene. Thus, when the heat is applied, the sealing part 1 increases in flexibility (becomes more flexible).

In addition, when the sealing part 1 is heated to a predetermined temperature, the folding process is performed. The folding process may be performed by a folding part 20 included in a folding apparatus to be described later.

The folding part 20 includes fixing parts 21 and 23, each of which fixes a point at which the sealing part 1 is bent when the folding is performed, and pressing parts 22 and 24, each of which presses the sealing part 1 in a direction in which the folding is performed. Thus, the folding process of the sealing part 1 is performed so that each of the pressing parts 22 and 24 is slid so that a predetermined point of the sealing part 1 is bent in a state in which each of the fixing parts 21 and 23 supports the sealing part to fix the sealing part.

Here, according to the length and the thickness of the sealing part 1 and according to the number of times of the folding, the folding process may be performed by being divided into multiple times, the first folding process <B> and the second folding process <C>, illustrated in FIG. 2, and the third folding process <E> and the fourth folding process <F>, illustrated in FIG. 3. That is, the folding processes may be selectively canceled, repeated, or added according to the length and the thickness of the sealing part 1.

Each of the fixing parts 21 and 23 and the pressing parts 22 and 24 may be provided as a different type of device according to each of the folding processes. For example, in the folding process <B>, in order to bend the sealing part 1 at a right angle, the fixing part 21 may be provided in the form of a plate having a slit or hole recessed therein and, when the sealing part enters the slit or hole, the pressing part 22 may be slid vertically to fold the sealing part at an angle of 90°.

In addition, in the second folding process, for the sealing part 1 to be folded at an angle of 180°, the fixing part 23 may be provided to support a bottom surface of the sealing part 1 (in the form of a plate or a block), and the pressing part 24 may be slid on the fixing part 23 horizontally (in the left and right direction in FIG. 2) to fold the sealing part at an angle of 180°.

When the sealing part 1 is cooled to a predetermined temperature or lower while the folding process is performed, the second heating process <D> is performed.

Thereafter, the third folding process <E> is performed in a manner similar to that of the first folding process <B> and then, the fourth folding process <F> is selectively performed in order to maintain a shape of the folded portion or to adjust the folding angle.

Lastly, a taping process of attaching a fixing tape 30 is performed so that the sealing part folded is fixed, after the folding process is completed.

Although it is described in this embodiment that the heating process is performed twice while the folding process is performed, the heating process may be added or performed only once as necessary while the folding process is performed.

However, at least one of the multiple heating processes is performed as a non-contact heating process of emitting light onto the sealing part 1 through the heating lamp 11 to heat the sealing part 1 (here, when the heating process is performed once, the non-contact heating process is performed).

However, the heating process may further include a contact heating process of allowing the heating blocks 12a and 12b heated to be in contact with and heat the sealing part 1, so that appropriate pressure is applied during the heating of the sealing part 1.

That is, in the heating process provided in this embodiment, contact heating process is performed and then, the non-contact heating process is performed, or the non-contact heating process is performed and then, the contact heating process is performed.

Here, one of the contact heating process and the non-contact heating process is performed and then, some of the folding process are performed, and the other of the contact heating process and the non-contact heating process is performed and then, the rest of the folding process are performed.

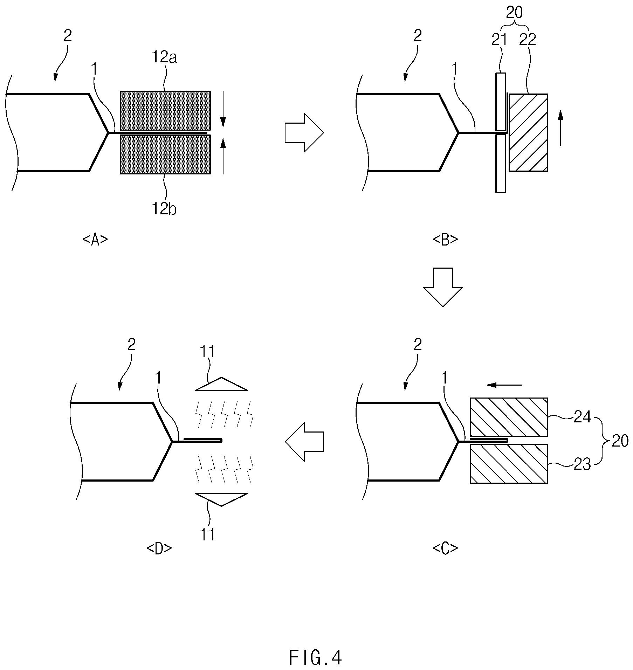

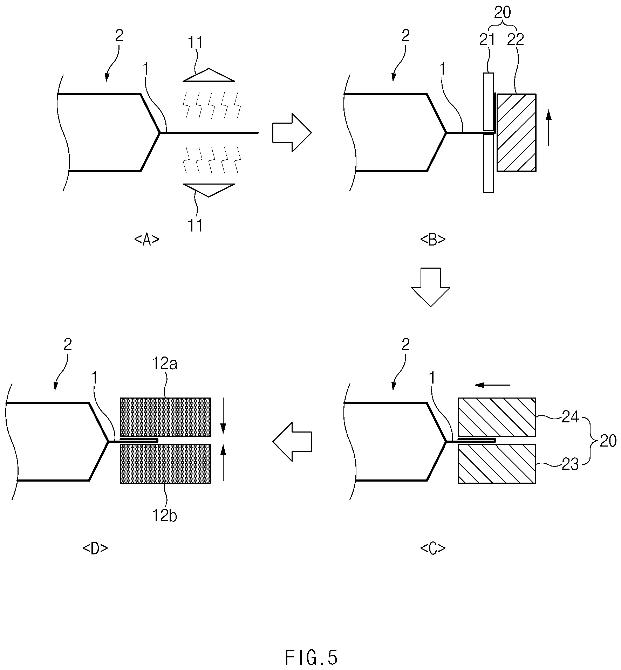

FIG. 4 is a view illustrating a process of folding the sealing part through the same process as that in FIG. 2, wherein contact heating is performed in a first heating process, and non-contact heating is performed in a second heating process. FIG. 5 is a view illustrating a process of folding the sealing part through the same process as that in FIG. 2, wherein the non-contact heating is performed in a first heating process, and the contact heating is performed in a second heating process.

That is, the heating process is performed multiple times, and, as illustrated in FIG. 4, the contact heating process through the heating blocks 12a and 12b may be first performed and then, some of the folding process may be performed, and the non-contact heating process of emitting light onto the sealing part 1 through the heating lamp 11 to heat the sealing part 1 may be performed in this state and then, the rest of the folding process may be sequentially performed.

Alternatively, as illustrated in FIG. 5, the non-contact heating process may be first performed and then, some of the folding process may be performed, and the contact heating process may be performed in such a state and then, the rest of the folding process may be performed.

That is, the folding method provided in the first embodiment may be performed as the non-contact heating process at least once while the multiple heating processes are performed, and the contact heating process may be selectively included.

### Second embodiment

The present invention provides an apparatus for folding a sealing part 1 of a pouch type secondary battery as a second embodiment. The folding apparatus according to the present invention is an apparatus for folding a sealing part of a pouch type secondary battery in which the sealing part protrudes in a lateral direction of a pouch an electrode assembly embedded therein. The apparatus is configured by including a heating part and a folding part 20.

The heating part is configured to heat the sealing part 1 to a predetermined temperature, and includes a heating lamp 11 that emits light onto the sealing part 1 to heat the sealing part 1. The heating lamp 11 is disposed at each of an upper side and a lower side of the sealing part 1 so as to heat a top surface and a bottom surface of the sealing part 1 at the same time.

In more detail, the heating part provided in this embodiment may further include heating blocks 12a and 12b in addition to the heating lamp 11 that emits light onto the sealing part to heat the sealing part.

The heating blocks 12a and 12b include an upper mold 12a and a lower mold 12b that are slidable to be away from or close to each other. At least one of the upper mold 12a or the lower mold 12b is heated to a predetermined temperature to be in contact with and heat the sealing part 1 when the sealing part 1 enters between the upper mold 12a and the lower mold 12b. Here, the upper mold 12a and the lower mold 12b may apply appropriate pressure to the sealing part 1.

In addition, the heating lamp 11 and each of the heating blocks 12a and 12b are configured to be slidable to be exchanged with each other.

In addition, the folding part 20 is configured to press and fold the heated sealing part 1. As described above, the folding part includes fixing parts 21 and 23, each of which fixes a point at which the sealing part is bent when the folding is performed, and pressing parts 22 and 24, each of which presses the sealing part 1 in a direction in which the folding is performed.

According to the length and the thickness of the sealing part 1 and according to the number of times of folding, each of the fixing parts 21 and 23 may be provided in the form of a plate having a slit or hole recessed therein so that the sealing part enters to efficiently fix the sealing part (as described above). Alternatively, the fixing part may be provided in the form of a plate or a block so as to support the bottom surface of the sealing part while the sealing part is folded at an angle of 180°.

The pressing parts 22 and 24 may be configured to be slidable to apply appropriate pressure in various directions so that the folding is performed according to a rotation position of the sealing part 1.

The present invention having the technical features as above may resolve the problems of the related art that the pressure is applied to the sealing part 1 to cause the damage because the heating lamp 11 emits the infrared light onto the sealing part 1 to perform the heating.

In addition, when compared to the contact heating method according to the related art, the heating temperature may be uniformly maintained and thus, the sealing quality of the sealing part 1 may be maintained to be consistent.

Moreover, in the present invention, the contact heating of allowing the heated heating blocks 12a and 12b to be in contact with and heat the sealing part 1 may be performed and thus, the heating may be performed while applying the appropriate pressure to the sealing part 1. Here, as the contact heating is additionally performed before and after the non-contact heating is performed, the pressure applied to the sealing part 1 may be reduced compared to the method according to the related art. Thus, the damage to the sealing part 1 may be prevented.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

1: Sealing part
11: Heating lamp
12a: Upper mold
12b: Lower mold
20: Folding part
21, 23: Fixing part
22, 24: Pressing part

## Claims

1. A method for folding a sealing part of a pouch type secondary battery in which the sealing part protrudes in a lateral direction of a pouch having an electrode assembly embedded therein, the method comprising:
a sealing part heating process of heating the sealing part; and
a folding process of pressing and folding the heated sealing part,
wherein the heating process comprises a non-contact heating process of emitting light onto the sealing part through a heating lamp to heat the sealing part.

2. The method of claim 1, wherein the sealing part comprises a layer made of a thermoplastic resin.

3. The method of claim 2, wherein the thermoplastic resin is polypropylene.

4. The method of claim 1, wherein the light emitted from the heating lamp is infrared light.

5. The method of claim 1, wherein the heating process comprises a contact heating process of allowing heated heating blocks to be in contact with and to heat the sealing part.

6. The method of claim 5, wherein, in the heating process, the contact heating process is performed and then, the non-contact heating process is performed.

7. The method of claim 5, wherein, in the heating process, the non-contact heating process is performed and then, the contact heating process is performed.

8. The method of claim 6 or 7, wherein one of the contact heating process and the non-contact heating process is performed and then, some of the folding process are performed, and
the other of the contact heating process and the non-contact heating process is performed and then, the rest of the folding process are performed.

9. The method of claim 1, wherein, in the heating process, the non-contact heating process of emitting the light onto the sealing part through the heating lamp to heat the sealing part is performed multiple times,
wherein the non-contact heating process is performed and then, some of the folding process are performed, and the non-contact heating process is performed again in this state and then, the rest of the folding process are performed.

10. The method of any one of claims 1 to 7 and 9, further comprising, after the folding process is completed, a taping process of attaching a fixing tape so that the folded sealing part is fixed.

11. An apparatus for folding a sealing part of a pouch type secondary battery in which the sealing part protrudes in a lateral direction of a pouch having an electrode assembly embedded therein, the apparatus comprising:
a heating part configured to heat the sealing part; and
a folding part configured to press and fold the heated sealing part,
wherein the heating part comprises a heating lamp configured to emit light onto and heat the sealing part.

12. The apparatus of claim 11, wherein the heating part comprises a heating block comprising an upper mold and a lower mold, which are slidable to be away from or close to each other, wherein at least one of the upper mold or the lower mold is heated to a predetermined temperature so as to be in contact with and heat the sealing part when the sealing part enters between the upper mold and the lower mold,
wherein the heating lamp and the heating block are slidable to be exchanged with each other.

13. The apparatus of claim 11, wherein the folding part comprises:
a fixing part configured to fix a point at which the sealing part is bent when the folding is performed; and
a pressing part configured to press the sealing part in a direction in which the folding is performed.
